# EUROPEAN PATENT SPECIFICATION

(11) **EP 2 527 893 B1**
(45) Date of publication and mention of the grant of the patent: **04.09.2013**
(21) Application number: 11305654.3
(22) Date of filing: 27.05.2011
(51) Int. Cl.: G02B 6/036

(54) **Single mode optical fiber**
Singlemode-Glasfaser
Fibre optique monomodale

(43) Date of publication of application: 28.11.2012
(73) Proprietor: Draka Comteq BV, 1083 HJ Amsterdam (NL)
(72) Inventor: Sillard, Pierre, 78150 Le Chesnay (FR); Bigot-Astruc, Marianne, 91460 Marcoussis (FR)
(74) Representative: op den Brouw-Sprakel, Vera Stefanie Irene

(56) References cited:
- EP-A1- 1 255 138
- EP-A1- 1 544 175
- DE-A1- 2 939 659
- US-A1- 2004 159 124
- US-A1- 2010 195 966
- US-B1- 6 175 680

## Description

The present invention concerns the field of optical fiber transmissions, and more specifically single mode optical fibers (SMF). The invention relates to a single mode optical fiber with reduced attenuation that can be manufactured from a preform with increased capacity.

For optical fibres, the index profile is generally classified according to the appearance of the graph of the function which associates the refractive index with the radius of the fibre. In standard fashion, the distance r to the centre of the fibre is shown on the x-axis, and on the y-axis, the difference between the refractive index and the refractive index of the fibre cladding. These curves are generally representative of the theoretical or set profile of the fibre, whilst the manufacturing constraints of the fibre may result in a slightly different profile. An optical fiber conventionally consists of an optical core, whose function is to transmit and possibly to amplify an optical signal, and of an optical cladding whose function is to confine the optical signal within the core. For this purpose, the refractive indexes of the core n_{c} and of the outer cladding n_{g} are such that n_{c}>n_{g}.

Step-index fibres, also called SMF ("Single Mode Fibres") are typically used as line fibres for optical fibre transmission systems. These fibres have a chromatic dispersion and a chromatic dispersion slope complying with specific telecommunications standards as well as standardized cut-off wavelength and effective area values.

In response to the need for compatibility between optical systems from different manufacturers, the International Telecommunication Union (ITU) has defined a standard, reference ITU-T G.652, with which a standard optical transmission fibre, called SSMF (Standard Single Mode Fibre), must comply.

Among others, the G.652 standard recommends for a transmission fibre the range [8.6; 9.5 µm] for the Mode Field Diameter (MFD) at a wavelength of 1310 nm; a maximum of 1260 nm for the value of the cable cut-off wavelength; the range [1300; 1324 nm] for the value of the zero dispersion wavelength, denoted λ₀; a maximum of 0.092 ps/nm²-km for the value of the chromatic dispersion slope. In standard fashion, the cable cut-off wavelength is measured as the wavelength at which the optical signal is no longer single mode after propagation over twenty-two metres of fibre, as defined by subcommittee 86A of the International Electrotechnical Commission in the standard IEC 60793-1-44.

Fibers with pure silica cores are also known, and are called Pure Silica Core Fibers (PSCFs). The absence of dopant in the core of a PSCF makes it possible to limit optical losses and notably the attenuation at a wavelength of 1550 nm. A PSCF therefore conventionally has a cladding in silica doped with fluorine to reduce its refractive index and ensure the function of confining the optical signal within the core.

In a known way *per se,* an optical fiber is made by drawing a preform on a fiber-drawing tower. A preform for example comprises a primary preform consisting of a very high quality glass tube making up a portion of the cladding and core of the fiber. This primary preform is then over cladded or sleeved in order to increase its diameter and to form a preform which may be used on a fiber-drawing tower. The scaled fiber-drawing operation consists of placing the preform vertically in a tower and of drawing a fiber strand from the end of the preform. For this, a high temperature is locally applied at one end of the preform until the silica is softened; the fiber-drawing rate and the temperature are then permanently monitored during the fiber drawing as they determine the diameter of the fiber. The geometry of the preform should perfectly observe the ratios of the refractive indexes and of the core and cladding diameters of the fiber so that the drawn fiber has the required profile.

The primary preform may consist of a substrate tube, generally in quartz, in which one or more layers of doped and/or undoped silica have been deposited to form the core and an inner cladding of the fiber. Deposition techniques inside a substrate tube include MCVD (Modified Chemical Vapor Deposition), FCVD (Furnace Chemical Vapor Deposition) or PCVD (Plasma Chemical Vapor Deposition). After depositing the layers corresponding to the core and the inner cladding, the tube is closed onto itself during an operation called collapsing. CVD techniques ensure that the OH peak remains low and attenuation at 1385 nm is therefore limited.

The primary preform may consist of a rod fabricated by outside deposition techniques, such as OVD (Outside Vapor Deposition) or VAD (Vapour Axial Deposition). No substrate tube is used in this case; doped and/or undoped silica layers are deposited by directing precursor gases and a torch onto a starting rod.

Component deposition is commonly referred to by the expression "doping", i.e., "dopants" are added to the silica in order to change its refractive index. Thus, germanium (Ge) or phosphorus (P) increases the refractive index of silica; they are often used for doping the central core of the fiber. Moreover, fluorine (F) or boron (B) lowers the refractive index of silica; fluorine is often used for forming depressed claddings.

Making a primary preform with a highly and large depressed cladding is delicate. Indeed, fluorine for instance is poorly incorporated in heated silica beyond a certain temperature whereas a high temperature is required for making glass. PCVD technique can be efficiently used to produce depressed cladding inside a deposition tube. Such a manufacturing technique is described in documents US RE 30,635 and US 4,314,833; it allows fluorine to be significantly incorporated into silica in order to form highly depressed claddings. A deposition tube, made of silica either pure or doped with fluorine, is provided and mounted in a glasswork tower. The tube is then set into rotation and a gas mixture of silica and dopants are injected into the tube. The tube crosses a microwave cavity in which the gas mixture is heated locally. The microwave heating generates plasma by ionization of the gases injected into the tube and the ionized dopants highly react with the silica particles, causing deposition of doped silica layers inside the tube. The high reactivity of the dopants, generated by the microwave heating, enables a high concentration of dopants to be incorporated into the silica layers.

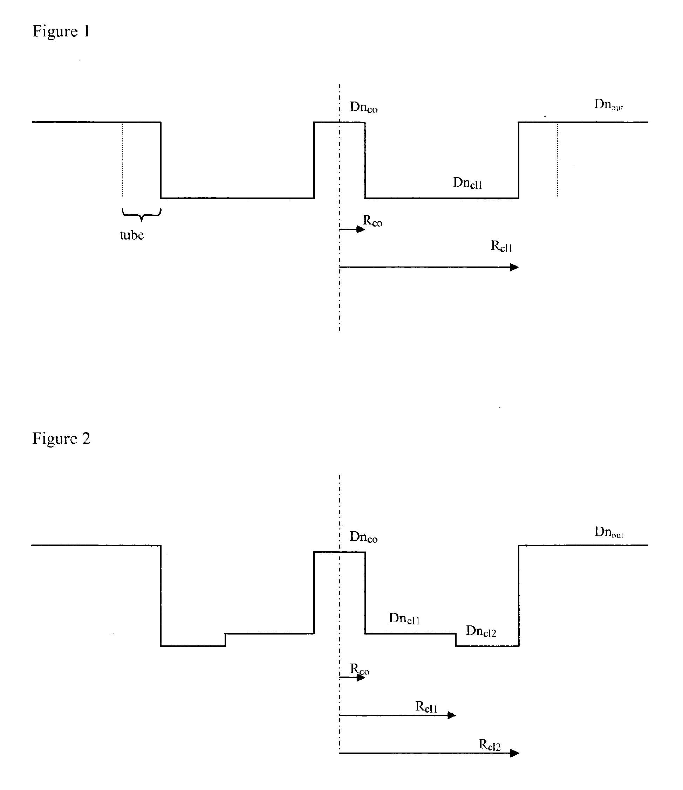

Figure 1 illustrates a set index profile of a conventional PSCF. The index profile of figure 1 shows a central core of radius R_{co} and index Dn_{co} corresponding to the index of silica, and an inner depressed cladding of outer radius R_{cl1} and index Dn_{cl1}. The inner cladding is said to be depressed since it has a refractive index that is less than that of the outer cladding Dnₒᵤₜ obtained by over cladding or sleeving of the primary preform. This outer cladding is generally of pure silica glass and has substantially the same refractive index as the central core in a PSCF. Typically, the outer cladding is made of the substrate tube used for making the primary preform and/or of the over clad or sleeve used to reach to requested diameter ratio.

In the above-described structure, with an outer cladding having substantially the same refractive index as the central core, the fundamental mode LP01 is not completely guided and shows additional losses, called leakage. To minimize these leakage losses, the percentage of energy propagating in the outer pure silica cladding must be reduced. The ratio between the outer radius of the fluorine-doped inner cladding and the radius of the core (R_{cl1}/R_{co}) must therefore be sufficiently high; i.e. the inner depressed cladding silica must be extended at least as far as a critical radius R_{cl1} whose value is dependent on the core radius and on the index difference between the core index Dn_{co} and the index of the inner cladding Dn_{cl1} ; for a standard SMF compliant with the G.652 recommendation it is considered that a ratio between the radius of the depressed cladding and the radius of the core that is 8 or more (R_{cl1}/R_{co} >8) ensures good confinement of the optical signal in the central core and an acceptable level of leakage losses.

MCVD, FCVD and PCVD techniques are satisfactory to obtain good quality core and highly depressed large inner cladding but is costly whenever large capacity preforms are sought. Capacity of a preform is defined as the quantity of optical fiber length which can be drawn from this preform. The greater the diameter of the preform is, the greater this capacity. To reduce manufacturing costs, it is desirable to provide long lengths of linear fiber drawn from one same preform. It is therefore sought to fabricate preforms of large diameter while complying with the above-mentioned constraints regarding the diameters of the central core and the depressed inner cladding.

US-A-2008/0031582 or US-A-5 044 724 discloses using a fluorine-doped deposition tube to make the primary preform. This solution enables to limit the quantity of fluorine-doped layers deposited inside the tube. WO-A-2010/003856 discloses fabrication of fluorine-doped tubes by POD (Plasma Outside Deposition) or OVD.

When a fluorine-doped deposition tube is used, the depressed cladding of the primary preform is composed of the inner deposited cladding and of the tube itself. The ratio between the radius of the depressed cladding and the radius of the core can thereby be increased while limiting the quantity of deposition inside the tube. However, this solution is difficult to master for very thick tubes because the deposition conditions change when a fluorine-doped tube is used instead of a non doped silica tube, ultimately limiting the reduction of the quantity deposited inside the tube.

US-A-2007/0003198 discloses a hybrid process wherein a rod constituting the Ge-doped core region is made by VAD or OVD and a cladding region is deposited inside a tube by MCVD. The core rod and the MCVD cladding tube are then assembled using a rod-in-tube technique. However, the fibers disclosed in this document don't have index profile structures with pure-silica cores and depressed claddings and as a result don't have their inherent issues, in particular achieving low attenuations at both 1383nm and 1550nm.

US-A-2003/0063878 discloses a method to manufacture large preform. The core and inner claddings are deposited by CVD in a deposition tube that is afterwards completely removed. The outer cladding is deposited by outside deposition or rod-in-tube methods.. This document aims at controlling attenuation at 1550 nm for non-zero dispersion-shifted fibers or dispersion-compensating fibers.

US-A-2004/0159124 discloses a method to manufacture very large preforms. The core is deposited by MCVD in a deposition tube that is afterwards completely removed. Doped over clad tube can then be used to extend the depressed region.

However, none of the above documents discloses a PSCF or slightly up-doped-core fibers having controlled leakage losses and reduced attenuation at both 1385 and 1550 nm.

The invention aims to facilitate manufacturing of a large capacity optical fiber preform while maintaining the optical quality of the fiber, notably for PSCF or slightly up-doped-core fibers with low attenuations at both 1385 and 1550nm.

This object is achieved with a single mode fiber comprising from center to periphery a core, at least first and second depressed claddings, and an outer cladding, wherein:
- the core has a radius comprised between 3.5 µm and 5.5 µm and an index difference with the outer cladding comprised between 0 and 3.10⁻³;
- the first depressed cladding has a radius comprised between 9 µm and 15 µm and an index difference with the outer cladding comprised between -5.5.10⁻³ and -2.5.10⁻³;
- the second depressed cladding has a radius comprised between 38 µm and 42 µm and an index difference with the first depressed cladding comprised between -0.5.10⁻³ and 0.5.10⁻³; and
- the outer cladding has a radius comprised between 61,5 µm and 63,5 µm

According to an embodiment, the fiber further comprising a third depressed cladding situated between first and second depressed claddings, said third depressed cladding having a radius comprised between 15 µm and 25 µm, an index difference with the first depressed cladding comprised between -0.5.10⁻³ and 0.5.10⁻³ and an index difference with the second depressed cladding comprised between -0.5.10⁻³ and 0.5.10⁻³.

According to embodiments, the fiber may further comprise one or more of the following characteristics:
- the core is made of undoped silica;
- the outer cladding is made of undoped silica;
- each of the depressed claddings is made of fluorine-doped silica;
- the fiber has attenuation at the wavelength of 1550 nm of less than 0.18 dB/km;
- the fiber has attenuation at the wavelength of 1383 nm of less than 0.35 dB/km, more preferably less than 0.32 dB/km;

The invention also proposes methods for manufacturing a single mode optical fiber according to the invention.

According to one embodiment, a method for manufacturing the fiber of the invention comprises the steps of:
- providing a deposition tube;
- performing deposition of layers inside the deposition tube to constitute the core and the first depressed cladding;
- removing completely the deposition tube;
- providing the second depressed cladding ;
- providing the outer cladding, thereby providing an optical preform;
- drawing a single mode optical fiber from said optical preform.

The deposition tube can be made of undoped quartz and can be removed by chemical etching or flame polishing or using a mechanical technique such as grinding or polishing. A combination of these techniques may also be used to remove the deposition tube.

According to another embodiment, a method for manufacturing the fiber of the invention comprises the steps of:
- providing a deposition tube made of Fluorine doped silica;
- performing deposition of layers inside the deposition tube to constitute the core and the first depressed cladding;
- providing the second depressed cladding surrounding the deposition tube, said deposition tube constituting the third depressed cladding;
- providing the outer cladding, thereby providing an optical preform;
- drawing a single mode optical fiber from said optical preform.

The second depressed cladding can be made by one of the following: sleeving with a doped tube, over cladding with doped silica, outside deposition with doped silica.

According to another embodiment, a method for manufacturing the fiber of the invention comprises the steps of:
- providing a core rod by outside deposition;
- providing at least two successive depressed claddings ;
- providing the outer cladding, thereby providing an optical preform;
- drawing a single mode optical fiber from said optical preform.

Each of the successive depressed claddings can be made by one of the following: sleeving with a doped tube, over cladding with doped silica, outside deposition with doped silica.

Other characteristics and advantages of the invention will become apparent on reading the following description of embodiments of the invention given as examples and with reference to the appended drawings which show:
- figure 1, already described, a set index profile of a PSCF according to a prior art method;
- figure 2, a set index profile of a fiber according to a first and a third embodiment of the invention;
- figure 3, a set index profile of a fiber according to a first and a third embodiment of the invention;
- figure 4, a set index profile of a fiber according to a second and a third embodiment of the invention.

The invention relates to a single mode fiber having low transmission losses and that can be manufactured at reduced cost without deteriorating the propagation characteristics.

For this purpose, the invention proposes a fiber having undoped silica core fiber - or slightly up-doped silica core - to limit attenuation and notably the attenuation at 1550 nm when Germanium doping is involved. Several depressed claddings are produced surrounding the core. Providing successive depressed claddings makes it possible to manufacture very large preforms at reduced costs. Position and dimension of the depressed claddings are carefully chosen such as to minimize the leakage losses of the fundamental LP01 mode, while keeping the leakage losses of the higher-order LP11 mode sufficiently high to ensure a cable cutoff wavelength compliant with the G.652 recommendation.

In a first embodiment, the invention proposes to make the core and an inner depressed cladding by CVD inside a deposition tube to limit attenuation and notably the attenuation at 1383 nm due to the OH peak; the deposition tube is then removed completely and an outer depressed cladding is produced with a down-doped sleeving tube or with outside deposition techniques to extend the depressed region. Such a configuration allows to reduce the width of the depressed inner cladding that is deposited inside the deposition tube and to put this substrate tube much closer to the central core, which yields much larger capacity performs and much lower manufacturing costs.

In a second embodiment, the invention proposes to make the core and an inner depressed cladding by CVD inside a down-doped deposition tube to limit attenuation and notably the attenuation at 1383 nm due to the OH peak; the depressed cladding is then extended with a down-doped tube or with OVD or any other outside deposition technique. In this embodiment the depressed cladding is composed of three different regions: a region made with CVD inside the down-doped deposition tube, a region constituted by the down-doped deposition tube and a region made by down-doped sleeving tube or an outside deposition technique. Such a configuration allows to reduce the width of the depressed inner cladding that is deposited inside the down-doped deposition tube and to increase the capacity of the final preform, which yields lower manufacturing costs.

In a third embodiment, the invention proposes to make the core with OVD or VAD technique to obtain a core rod. The first, second and possibly the third depressed claddings can be obtained by doped tubes sleeved over the core rod and/or with OVD or any other outside deposition technique. This way, the inherent attenuations issues at 1385 nm linked to the use of VAD or OVD techniques with Fluorine-doped claddings are avoided.

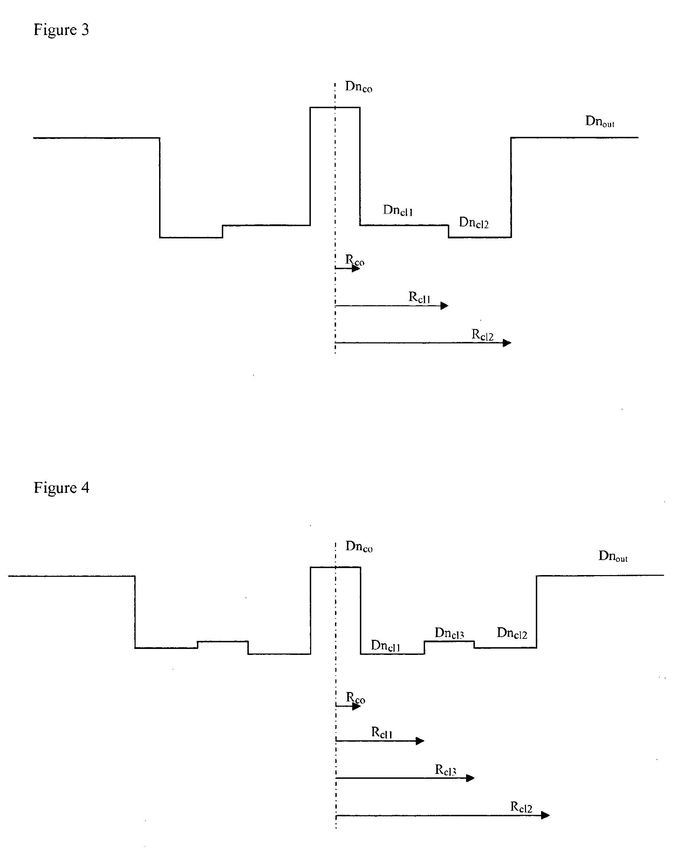

Figures 2 and 3 illustrate set index profiles of fibers according to first and third embodiments of the invention. The single mode fiber of the invention comprises, from center to periphery, a core, a first depressed cladding, a second depressed cladding and an outer cladding. The outer cladding has an index Dnₒᵤₜ. The outer cladding can be undoped silica or slightly doped silica. The core has a radius R_{co} comprised between 3.5 µm and 5.5 µm and an index difference with the outer cladding (Dn_{co}-Duₒᵤₜ) comprised between 0 and 3.10⁻³. More preferably the core has an index difference with the outer cladding comprised between 0.5.10⁻³ and 2.5.10⁻³. The slight doping - or even none doping - of the core ensures limited attenuation at 1550 nm. In the embodiment of figure 2, the core has substantially the same index as the outer cladding. In this case, core and/or outer cladding can be made of undoped silica or slightly doped silica or co-doped silica. In the embodiment of figure 3, the core as an index that is slightly more than the outer cladding. In this case, core can be made of slightly doped silica or co-doped silica and outer cladding can be made of undoped silica to minimize the costs.

The first depressed cladding has a radius R_{cl1} comprised between 9 µm and 15 µm and an index difference (Dn_{cl1}-Dnₒᵤₜ) with the outer cladding comprised between -5.5.10⁻³ and -2.5.10⁻³. The small radius of the first depressed cladding - as compared with the radius of the inner depressed cladding of the prior art in figure 1 - ensures limited deposition by CVD and cost control. If only two depressed claddings compose the depressed region (as illustrated in figures 2 and 3), then the second depressed cladding has a radius R_{cl2} comprised between 38 µm and 42 µm and an index difference with the outer cladding (Dn_{cl2}-Dnₒᵤₜ) such that the index difference between first depressed cladding and second depressed cladding (Dn_{cl2}-Dn_{cl1}) is comprised between -0.5.10⁻³ and 0.5.10⁻³.

Figure 4 illustrates set index profile of a fiber according to second and third embodiment of the invention. According to this embodiment, a third depressed cladding is provided between first and second depressed claddings. When three depressed claddings compose the depressed region (as illustrated in figure 4), then the third depressed cladding has a radius R_{cl3} comprised between 15 µm and 25 µm, i.e. the third depressed cladding is added between the first depressed cladding having a radius comprised between 9 µm and 15 µm and the second depressed cladding having a radius comprised between 38 µm and 42 µm. The third depressed cladding has an index difference (Dn_{cl3}-Dnₒᵤₜ) with the outer cladding such that its index difference to both first and second depressed cladding (Dn_{cl3}-Dn_{cl1} and Dn_{cl3}-Dn_{cl2}) is comprised between -0.5.10⁻³ and 0.5.10⁻³.

The size and index of the second - and third - depressed cladding are chosen with respect to the radius and index of the first depressed - and second - cladding to limit leakage loss and ensure cut-off wavelength compliant with the G.652 recommendation.

The outer cladding is obtained by over cladding with silica based material or by sleeving with quartz tube or by any outside deposition techniques. For instance, APVD (Advanced Plasma and Vapor Deposition) can used to make the outer cladding. The fiber has a normalized outer diameter with the outer cladding having a radius Rₒᵤₜ of 62.5 µm±1 µm.

According to a first embodiment, the fiber of the invention with two depressed cladding regions (as illustrated in figures 2 or 3) can be manufactured as follow.

The core and first depressed cladding are obtained by deposition inside a deposition tube and the second depressed cladding is obtained by sleeving with a down-doped tube or by using outside deposition techniques. Viscosity and/or index value in the first depressed cladding may therefore be different from the viscosity and/or index value in the second depressed cladding.

More specifically, a deposition tube is provided and the core and first depressed cladding of the fiber are deposited by CVD inside said tube. The tube is then completely removed after the deposition of the core and first depressed cladding was completed. It is therefore possible to use an undoped quartz tube to perform CVD under controlled parameters. Notably, the core and first depressed cladding can be deposited by PCVD or MCVD or FCVD. The tube can be removed after deposition is completed by chemical etching and/or mechanical polishing.

Once the deposition tube was removed, the core and first depressed cladding are sleeved with a doped tube, for instance fluorine doped tube. Fluorine doped tube is known for instance from WO-A-2010/003856, US-A-2008/0031582 or US-A-5 044 724. However, those documents teach to use such fluorine doped tubes for inside deposition.

Sleeving with a doped tube allows extending the depressed region of the preform by constituting a second depressed cladding. Only the first depressed cladding, closest to the core, was deposited by CVD, the second depressed cladding being added by sleeving. The quantity of CVD deposition is limited and the cost of the preform is reduced while a large depressed region is obtained. The preform is finally over-cladded with silica based material or sleeved with quartz tube to reach the requested diameter ratio. Over-cladding will be preferred in case of large preforms for cost control.

According to a second embodiment, the fiber of the invention with three depressed cladding regions (as illustrated in figure 4) can be manufactured as follows.

The core and first depressed cladding are obtained by deposition inside a down-doped deposition tube that will constitute the third depressed cladding, and the second depressed cladding is obtained by sleeving with a down-doped tube or by using outside deposition techniques. As in the second embodiment, the first depressed cladding, closest to the core, can be deposited by PCVD or MCVD or FCVD. The quantity of CVD deposition is limited and the cost of the preform is reduced while a large depressed region is obtained.

Fluorine doped tube is known for instance from WO-A-2010/003856, US-A-2008/0031582 or US-A-5 044 724. If, those documents teach to use such Fluorine doped tubes for inside deposition, there is no indication to a further depressed cladding surrounding the deposition tube that enables to significantly increase the capacity of the final perform. The preform is finally over-cladded with silica based material or sleeved with quartz tube to reach the requested diameter ratio. Over-cladding will be preferred in case of large preforms for cost control.

According to a third embodiment, the fiber of the invention with two or three depressed cladding regions (as illustrated in figures 2, 3 and 4) can be manufactured using outside deposition techniques and/or doped tubes to obtain the first, second and third depressed claddings. Viscosity and/or index value in each depressed cladding may therefore be different from the viscosity and/or index value in the other depressed cladding.

More specifically, a core rod can be obtained by OVD or VAD; each depressed cladding can be obtained by any outside deposition technique or by sleeving with a doped tube; and an outer cladding can be obtained by over-cladding with silica based material (for instance by APVD) or by sleeving with quartz tube to reach the requested diameter ratio.

Table I below gives examples of set profiles for fibers according to the invention (examples 1 to 5), set profiles for fibers outside the scope of the invention (Examples 2b and 3b) and a comparative example (a set profile as illustrated in figure 1).

**Table I**

| Profiles | R_{co} (µm) | R_{cl1} (µm) | R_{cl3} (µm) | R_{cl2} (µm) | Rₒᵤₜ (µm) | Dn_{co}.10⁻³ @633nm | Dn_{cl1}.10⁻³ @633 nm | Dn_{cl3}.10⁻³ @633 nm | Dn_{cl2}.10⁻³ @633 nm |
|---|---|---|---|---|---|---|---|---|---|
| Comparative Example | 4,35 | 41,00 | --- | | 62,50 | 0,0 | -5,2 | --- | --- |
| Example 1 | 4,35 | 15,00 | --- | 41,00 | 62,50 | 0,5 | -4,7 | --- | -4,5 |
| Example 2 | 4,35 | 13,80 | --- | 41,00 | 62,50 | 2,2 | -3,0 | --- | -3,4 |
| Example 2b | 4,35 | 13,80 | --- | 41,00 | 62,50 | 2,2 | -3,0 | --- | **-4,0** |
| Example 3 | 4,35 | 9,50 | --- | 39,00 | 62,50 | 2,2 | -3,0 | --- | -3,0 |
| Example 3b | 4,35 | 9,50 | --- | 39,00 | 62,50 | 2,2 | -3,0 | --- | **-2,4** |
| Examples 4 | 4,50 | 15,00 | --- | 40,00 | 62,50 | 1,0 | -4,5 | --- | -4,5 |
| Example 5 | 4.35 | 15.00 | 22,00 | 41,00 | 62.50 | 0.5 | -4.7 | -4.6 | -4.5 |

Table II below presents optical characteristics of the fibers of the seven examples and comparative example described above.

**Table II**

| Profiles | λ_{cc} (nm) | 2W₀₂ @1310nm (µm²) | 2W₀₂ @ 1550nm (µm²) | D @1550nm (ps/nm-km) | S @ 1550nm (ps/nm²-km) | ZDW (nm) | S @ ZDW (ps/nm²-km) | Leakage loss @1550 nm (dB/km) |
|---|---|---|---|---|---|---|---|---|
| Comp. Example | 1240 | 9,2 | 10,3 | 16,3 | 0,056 | 1315 | 0,086 | 0,001 |
| Ex. 1 | <1260 | 9,1 | 10,3 | 16,2 | 0,055 | 1306 | 0,083 | 0,006 |
| Ex. 2 | <1260 | 9,1 | 10,3 | 16,4 | 0,056 | 1309 | 0,084 | 0,001 |
| Ex. 2b | **>1400** | 9,1 | 10,3 | 16,4 | 0,057 | 1309 | 0,084 | 0,000 |
| Ex. 3 | <1260 | 9,1 | 10,3 | 16,3 | 0,056 | 1309 | 0,084 | 0,009 |
| Ex.3b | <1260 | 9,1 | 10,3 | 15,6 | 0,053 | 1312 | 0,082 | **>0.1** |
| Ex. 4 | <1260 | 9,1 | 10,2 | 17,1 | 0,056 | 1300 | 0,086 | 0,001 |
| Ex. 5 | <1260 | 9,1 | 10,3 | 16,2 | 0,055 | 1306 | 0,083 | 0,005 |

Table III below presents the bending losses and attenuation of the fibers of the seven examples and comparative example described above.

**Table III**

| Profiles | Macro-bend loss @1550nm Rc=10mm (dB/turn) | Macro-bend loss @1625nm Rc=10mm (dB/turn) | Macro-bend loss @1625nm Rc=30mm (dB/100turns) | Attenuation @1550 nm (dB/km) | Attenuation @1383 nm (dB/km) |
|---|---|---|---|---|---|
| Comp. example | 0.2 | 0.7 | <0.05 | <0.18 | <0.32 |
| Ex. 1 | 0.8 | 2.6 | <0.05 | <0.18 | <0.32 |
| Ex. 2 | 0.1 | 0.3 | <0.01 | <0.18 | <0.35 |
| Ex. 2b | <0.05 | <0.1 | <0.01 | <0.18 | <0.35 |
| Ex. 3 | 0.4 | 1.1 | <0.05 | <0.18 | <0.35 |
| Ex.3b | **>1** | **>5** | **>1** | ***>0.19*** | ***>0.35*** |
| Ex. 4 | 0.09 | 0.3 | <0.01 | <0.18 | <0.32 |
| Ex. 5 | 0.8 | 2.6 | <0.05 | <0.18 | <0.32 |

Examples 2b and 3b are outside the scope of the invention because the index difference between the first and second depressed claddings (Dn_{cl2}- Dn_{cl1}) is too high, i.e. more than ±0.5.10⁻³. It is apparent from table II that example 2b has a cut-off wavelength that does not comply with the G.652 recommendation and that example 3b has high leakage losses, high bending losses and high attenuation.

It can be seen from table II that the fibers of the invention are fully compliant with G.652 standard mentioned above. It can also be seen from table II that leakage loss are controlled in the fibers of the invention.

It can be seen from table III that macro-bend loss are controlled in the fibers of the invention. The fiber of the invention could therefore be used in optical fiber systems to the user. Table II also shows that attenuation of the fibers of the invention is limited and notably the attenuation at 1383 nm. The attenuation at 1550 nm is less than 0.18 dB.km and the attenuation at 1383 nm is less than 0.35 dB/km or even less than 0.32 dB/km. The use of a quartz tube to deposit a slightly doped silica core makes it possible to reduce the OH-peak and the removal of the deposition tube does not jeopardize the optical characteristics of the fiber.

The fiber of the invention can be manufactured from a large capacity preform. For a deposition tube with a cross sectional area of 180 mm² yielding a first depressed cladding radius R_{cl1} of 10 mm after collapse, final preforms of 83.3 mm outside diameter were obtained for examples 1, 4 and 5; a final preform of 90.6 mm outside diameter was obtained for example 2; and a final preform of 131.6 mm outside diameter was obtained for example 3. As a comparison, when the deposition tube is kept as part of the outer cladding (comparative example), a final preform of 30.5 mm outside diameter is obtained, and when the deposition tube is down-doped and used without any further depressed cladding, yielding the end of the depressed cladding at a radius of 12.5 mm after collapse (equivalent to 40 µm on fiber), a final perform of 39 mm outside diameter is obtained. The fiber of the invention can therefore be manufactured at minimized cost. Indeed, the width of the depressed cladding deposited inside the deposition tube (R_{cl1}) can be much smaller with the set profile of the fiber of the invention.

It should be noted that the present invention is not limited to the embodiments described as examples. In particular, the set profiles in figures are given by way of examples and the manufacturing methods described are not limiting.

## Claims

1. A single mode optical fiber comprising from center to periphery a core, at least first and second depressed claddings, and an outer cladding, wherein:
- the core has a radius (R_{co}) comprised between 3.5 µm and 5.5 µm and an index difference with the outer cladding (Dn_{co}-Dnₒᵤₜ₎ comprised between 0 and 3.10⁻³;
- the first depressed cladding has a radius (R_{cl1}) comprised between 9 µm and 15 µm and an index difference with the outer cladding (Dn_{cl1}-Dnₒᵤₜ) comprised between -5.5.10⁻³ and -2.5.10⁻³;
- the second depressed cladding has a radius (R_{cl2} comprised between 38 µm and 42 µm and an index difference with the first depressed cladding (Dn_{cl2}-D_{cl1}) comprised between -0.5.10⁻³ and 0.5.10⁻³; and
- the outer cladding has a radius comprised between 61,5 µm and 63,5 µm.

2. The fiber of claim 1, further comprising a third depressed cladding situated between first and second depressed claddings, said third depressed cladding having a radius (R_{cl3}) comprised between 15 µm and 25 µm, an index difference with the first depressed cladding (Dn_{cl3}-D_{cl1}) comprised between - 0.5.10⁻³ and 0.5.10⁻³ and an index difference with the second depressed cladding (Dn_{cl2}-Dn_{cl2}) comprised between -0.5.10⁻³ and 0.5.10⁻³.

3. The fiber of any one of the preceding claims, wherein the core is made of undoped silica.

4. The fiber of any one of the preceding claims, wherein the outer cladding is made of undoped silica.

5. The fiber of any one of the preceding claims, wherein each of the depressed claddings is made of fluorine-doped silica.

6. The fiber of any one of the preceding claims, having attenuation at the wavelength of 1550 nm of less than 0.18 dB/km.

7. The fiber of any one of the preceding claims, having attenuation at the wavelength of 1383 nm of less than 0.35 dB/km.

8. The fiber of any one of preceding claims, having attenuation at the wavelength of 1383 nm of less than 0.32 dB/km.

9. A method for manufacturing a single mode optical fiber having the features for any one of claims 1 to 8, the method comprising the steps of :
- providing a deposition tube;
- performing deposition of layers inside the deposition tube to constitute the core and the first depressed cladding;
- removing completely the deposition tube;
- providing the second depressed cladding ;
- providing the outer cladding, thereby providing an optical preform;
- drawing a single mode optical fiber from said optical preform.

10. The method of claim 9, wherein the deposition tube is made of undoped quartz.

11. The method of claim 9 or 10, wherein removing the deposition tube is made by chemical etching or flame polishing or grinding or polishing or a combination thereof

12. A method for manufacturing a single mode optical fiber having the features of claim 2, the method comprising the steps of :
- providing a deposition tube made of Fluorine doped silica;
- performing deposition of layers inside the deposition tube to constitute the core and the first depressed cladding;
- providing the second depressed cladding surrounding the deposition tube, said deposition tube constituting the third depressed cladding;
- providing the outer cladding, thereby providing an optical preform;
- drawing a single mode optical fiber from said optical preform.

13. The method of any one of claims 9 to 12 wherein the second depressed cladding is made by one of the following: sleeving with a doped tube, over cladding with doped silica, outside deposition with doped silica.

14. A method for manufacturing a single mode optical fiber having the features for any one of claims 1 to 8, the method comprising the steps of :
- providing a core rod by outside deposition;
- providing at least two successive depressed claddings ;
- providing the outer cladding, thereby providing an optical preform;
- drawing a single mode optical fiber from said optical preform.

15. The method of claim 14, wherein each of the successive depressed claddings is made by one of the following: sleeving with a doped tube, over cladding with doped silica, outside deposition with doped silica.

## Patentansprüche

1. Einmodenglasfaser, die vom Mittelpunkt zum Rand einen Kern, wenigstens erste und zweite abgesenkte Mäntel und einen Außenmantel aufweist, wobei:
- der Kern einen Radius (R_{co}) zwischen 3,5 µm und 5,5 µm und einen Brechungsindexunterschied mit dem Außenmantel (Dn_{co}-Dnₒᵤₜ) zwischen 0 und 3.10⁻³ hat,
- der erste abgesenkte Mantel einen Radius (R_{cl1}) zwischen 9 µm und 15 µm und einen Brechungsindexunterschied mit dem Außenmantel (Dn_{cl1}-Dnₒᵤₜ) zwischen -5,5.10⁻³ und -2,5.10⁻³ hat,
- der zweite abgesenkte Mantel einen Radius (R_{cl2}) zwischen 38 µm und 42 µm und einen Brechungsindexunterschied mit dem ersten abgesenkten Mantel (Dn_{cl2}-Dn_{cl1}) zwischen -0,5.10⁻³ und 0,5.10⁻³ hat, und
- der Außenmantel einen Radius zwischen 61,5 µm und 63,5 µm hat.

2. Faser nach Anspruch 1, ferner mit einem dritten abgesenkten Mantel, der zwischen den ersten und zweiten abgesenkten Mänteln angeordnet ist, wobei der dritte abgesenkte Mantel einen Radius (R_{cl3}) zwischen 15 µm und 25 µm, einen Brechungsindexunterschied mit dem ersten abgesenkten Mantel (Dn_{cl3}-Dn_{cl1}) zwischen -0,5.10⁻³ und 0,5.10⁻³ und einen Brechungsindexunterschied mit dem zweiten abgesenkten Mantel (Dn_{cl3}-Dn_{cl2}) zwischen -0,5.10⁻³ und 0,5.10⁻³ hat.

3. Faser nach einem der vorhergehenden Ansprüche, wobei der Kern aus undotiertem Siliziumdioxid hergestellt ist.

4. Faser nach einem der vorhergehenden Ansprüche, wobei der Außenmantel aus undotiertem Siliziumdioxid hergestellt ist.

5. Faser nach einem der vorhergehenden Ansprüche, wobei jeder der abgesenkten Mäntel aus Fluor-dotiertem Siliziumdioxid hergestellt ist.

6. Faser nach einem der vorhergehenden Ansprüche, die bei einer Wellenlänge von 1550 nm eine Dämpfung von weniger als 0,18 dB/km hat.

7. Faser nach einem der vorhergehenden Ansprüche, die bei einer Wellenlänge von 1383 nm eine Dämpfung von weniger als 0,35 dB/km hat.

8. Faser nach einem der vorhergehenden Ansprüche, die bei einer Wellenlänge von 1383 nm eine Dämpfung von weniger als 0,32 dB/km hat.

9. Verfahren zur Herstellung einer Einmodenglasfaser mit den Merkmalen gemäß einem der Ansprüche 1 bis 8, wobei das Verfahren die folgenden Schritte umfasst:
- Bereitstellen einer Abscheidungsröhre,
- Durchführen einer Abscheidung von Schichten in der Abscheidungsröhre zur Bildung des Kerns und des ersten abgesenkten Mantels,
- vollständiges Entfernen der Abscheidungsröhre,
- Bilden des zweiten abgesenkten Mantels,
- Bilden des Außenmantels, wodurch eine optische Vorform gebildet wird,
- Ziehen einer Einmodenglasfaser aus der optischen Vorform.

10. Verfahren nach Anspruch 9, wobei die Abscheidungsröhre aus undotiertem Quartz hergestellt ist.

11. Verfahren nach Anspruch 9 oder 10, wobei das Entfernen der Abscheidungsröhre durch chemisches Ätzen oder Flammenpolieren oder Schleifen oder Polieren oder einer Kombination daraus erfolgt.

12. Verfahren zur Herstellung einer Einmodenglasfaser, mit den Merkmalen von Anspruch 2, welches die folgenden Schritte umfasst:
- Bereitstellen einer Abscheidungsröhre aus Fluor-dotiertem Siliziumdioxid,
- Durchführen einer Abscheidung von Schichten in der Abscheidungsröhre zur Bildung des Kerns und des ersten abgesenkten Mantels,
- Bilden des zweiten abgesenkten Mantels, der die Abscheidungsröhre umgibt, wobei die Abscheidungsröhre den dritten abgesenkten Mantel bildet,
- Bilden des Außenmantels, wodurch eine optische Vorform gebildet wird,
- Ziehen einer Einmodenglasfaser aus der optischen Vorform.

13. Verfahren nach einem der Ansprüche 9 bis 12, wobei der zweite abgesenkte Mantel durch eines der Folgenden hergestellt wird: Überziehen mit einer dotierten Röhre, Verkleiden mit dotiertem Siliziumdioxid, Außenabscheidung mit dotiertem Siliziumdioxid.

14. Verfahren zur Herstellung einer Einmodenglasfaser, mit den Merkmalen gemäß einem der Ansprüche 1 bis 8, mit den folgenden Schritten:
- Bilden eines Kernstabes durch Außenabscheidung,
- Bilden von wenigstens zwei aufeinanderfolgenden abgesenkten Mänteln,
- Bilden des Außenmantels, wodurch eine optische Vorform gebildet wird,
- Ziehen einer Einmodenglasfaser aus der optischen Vorform.

15. Verfahren nach Anspruch 14, wobei jeder der aufeinanderfolgenden abgesenkten Mäntel durch eines der Folgenden hergestellt wird: Überziehen mit einer dotierten Röhre, Verkleiden mit dotiertem Siliziumdioxid, Außenabscheidung mit dotiertem Siliziumdioxid.

## Revendications

1. Fibre optique monomode comprenant du centre à la périphérie une âme, au moins des première et deuxième gaines enfoncées, et une gaine externe, dans laquelle :
- l'âme a un rayon (R_{co}) compris entre 3,5 µm et 5,5 µm et une différence d'indice par rapport à la gaine externe (Dn_{co}-Dnₒᵤₜ) comprise entre 0 et 3.10⁻³ ;
- la première gaine enfoncée a un rayon (R_{c11}) compris entre 9 µm et 15 µm et une différence d'indice par rapport à la gaine externe (Dn_{c11}-Dnₒᵤₜ) comprise entre -5,5.10⁻³ et 2,5.10⁻³ ;
- la deuxième gaine enfoncée a un rayon (R_{c12}) compris entre 38 µm et 42 µm et une différence d'indice par rapport à la première gaine enfoncée (Dn_{c12}-Dn_{c11}) comprise entre -0,5.10⁻³ et 0,5.10⁻³ ; et
- la gaine externe a un rayon compris entre 61,5 µm et 63,5 µm.

2. Fibre selon la revendication 1, comprenant en outre une troisième gaine enfoncée située entre les première et deuxième gaines enfoncées, ladite troisième gaine enfoncée ayant un rayon (R_{c13}) compris entre 15 µm et 25 µm, une différence d'indice par rapport à la première gaine enfoncée (Dn_{c13}-Dn_{c11}) comprise entre -0,5.10⁻³ et 0,5.10⁻³ et une différence d'indice par rapport à la deuxième gaine enfoncée (Dn_{c13}-Dn_{c12}) comprise entre -0,5.10⁻³ et 0,5.10⁻³.

3. Fibre selon l'une quelconque des revendications précédentes, dans laquelle l'âme est constituée de silice non dopée.

4. Fibre selon l'une quelconque des revendications précédentes, dans laquelle la gaine externe est constituée de silice non dopée.

5. Fibre selon l'une quelconque des revendications précédentes, dans laquelle chacune des gaines enfoncées est constituée de silice dopée au fluor.

6. Fibre selon l'une quelconque des revendications précédentes, ayant une atténuation à longueur d'onde de 1 550 nm de moins de 0,18 dB/km.

7. Fibre selon l'une quelconque des revendications précédentes, ayant une atténuation à longueur d'onde de 1 383 nm de moins de 0,35 dB/km.

8. Fibre selon l'une quelconque des revendications précédentes, ayant une atténuation à longueur d'onde de 1 383 nm de moins de 0,32 dB/km.

9. Procédé de fabrication d'une fibre optique monomode ayant les caractéristiques de l'une quelconque des revendications 1 à 8, le procédé comprenant les étapes consistant à :
- fournir un tube de dépôt ;
- réaliser le dépôt de couches à l'intérieur du tube de dépôt afin de constituer l'âme et la première gaine enfoncée ;
- éliminer complètement le tube de dépôt ;
- fournir la deuxième gaine enfoncée ;
- fournir la gaine externe, fournissant ainsi une préforme optique ;
- étirer une fibre optique monomode à partir de ladite préforme optique.

10. Procédé selon la revendication 9, dans lequel le tube de dépôt est constitué de quartz non dopé.

11. Procédé selon la revendication 9 ou 10, dans lequel l'élimination du tube de dépôt est réalisée par gravage chimique ou polissage à la flamme ou broyage ou polissage ou une combinaison de ceux-ci.

12. Procédé de fabrication d'une fibre optique monomode ayant les caractéristiques de la revendication 2, le procédé comprenant les étapes consistant à :
- fournir un tube de dépôt constitué de silice dopée au fluor ;
- réaliser le dépôt de couche à l'intérieur du tube de dépôt afin de constituer l'âme et la première gaine enfoncée ;
- fournir la deuxième gaine enfoncée entourant le tube de dépôt, ledit tube de dépôt constituant la troisième gaine enfoncée ;
- fournir la gaine externe, fournissant ainsi une préforme optique ;
- étirer une fibre optique monomode à partir de ladite préforme optique.

13. Procédé selon l'une quelconque des revendications 9 à 12, dans lequel la deuxième gaine enfoncée est réalisée par l'un des processus suivants : chemisage avec un tube dopé, surgainage avec de la silice dopée, dépôt externe avec de la silice dopée.

14. Procédé de fabrication d'une fibre optique monomode ayant les caractéristiques de l'une quelconque des revendications 1 à 8, le procédé comprenant les étapes consistant à :
- fournir une tige d'âme par dépôt externe ;
- fournir au moins deux gaines enfoncées successives ;
- fournir la gaine externe, fournissant ainsi une préforme optique ;
- étirer une fibre optique monomode à partir de ladite préforme optique.

15. Procédé selon la revendication 14, dans lequel chacune des gaines enfoncées successives est réalisée par l'un des processus suivants : chemisage avec un tube dopé, surgainage avec de la silice dopée, dépôt externe avec de la silice dopée.
